# FASCICULE DE BREVET EUROPEEN

(11) **EP 2 480 455 B1**
(45) Date de publication et mention de la délivrance du brevet: **30.04.2014**
(21) Numéro de dépôt: 10770590.7
(22) Date de dépôt: 20.09.2010
(51) Int. Cl.: B64D 27/26, B64D 27/18, B64D 27/00

(54) **MAT D'ACCROCHAGE DE MOTEUR D'AERONEF, ENSEMBLE COMPRENANT CE MAT ET AERONEF ASSOCIE**
TRIEBWERKSPYLON FÜR EIN FLUGZEUG, ANORDNUNG MIT DIESEM PYLON UND ZUGEHÖRIGES FLUGZEUG
AIRCRAFT ENGINE PYLON, ASSEMBLY COMPRISING SAID PYLON AND RELATED AIRCRAFT

(30) Priorité: 22.09.2009 FR 0956528
(43) Date de publication de la demande: 01.08.2012
(73) Titulaire: Airbus Operations, 31060 Toulouse (FR)
(72) Inventeur: JOURNADE, Frédéric, F-31100 Toulouse (FR); LAFONT, Laurent, F-31320 Pechbusque (FR); AGOSTINI, Laurent, F-31880 La Salvetat Saint Gilles (FR); RENAUD, Eric, F-31480 Brignemont (FR); JALBERT, Delphine, F-31840 Seilh (FR)
(74) Mandataire: Ilgart, Jean-Christophe
(86) Numéro de dépôt international: PCT/FR2010/051949
(87) Numéro de publication internationale: WO 2011/036385

(56) Documents cités:
- FR-A1- 2 873 987
- FR-A1- 2 900 907
- FR-A1- 2 913 664
- FR-A1- 2 928 347

## Description

Le sujet de l'invention est d'abord un mât d'accrochage d'un moteur d'aéronef, ainsi qu'un ensemble d'aéronef comprenant ce mât et un aéronef associé.

Il existe de nombreux genres de mâts d'accrochage de moteurs d'aéronefs à partir d'un fuselage ou d'une voilure ; la plupart comprennent, après une partie principale linéaire du mât, une partie de raccord à laquelle le moteur est attaché et qui est en forme essentiellement de demi-barrique. Cette conception présente plusieurs inconvénients, et avant tout une complexité de fabrication du mât à cause de la forme compliquée de la partie de raccord et de sa jonction avec la partie principale, ainsi qu'une mauvaise transmission des efforts de poussée originaires du moteur, qui produisent des moments de flexion importants dans la partie de raccord et des vibrations.

Les brevets français 2 873 088 et 2 900 907, qui est considéré l'état de la technique la plus proche, illustrent des conceptions connues de mâts d'accrochage.

Un premier but de l'invention est donc de proposer un mât d'accrochage de moteur d'aéronef de forme simplifiée, exempte d'irrégularités autant que possible, capable de recevoir l'ensemble des efforts moteurs dans un même plan sensiblement perpendiculaire à l'axe du moteur et qui permet dans certaines réalisations particulières de filtrer efficacement les vibrations originaires de celui-ci et d'améliorer le confort de l'appareil.

Une forme générale de l'invention est un mât d'accrochage de moteur d'aéronèf, comprenant une partie principale linéaire et une partie de raccord jointe à la partie principale, caractérisé en ce que la partie de raccord comprend deux ailes planes s'étendant latéralement à la partie principale en formant un angle entre elles, et une bride d'attache ayant la capacité de reprendre en totalité les efforts moteurs, la bride d'attache s'étendant sur au moins un secteur de cercle et étant jointe aux ailes par une face plane.

Les deux ailes de la partie de raccord fournissent une transition de forme entre l'extrémité de la partie principale linéaire et la bride circulaire par laquelle le moteur est attaché, qui est propice à une bonne transmission des efforts et à la simplicité de fabrication.

Les ailes peuvent être composées de panneaux éventuellement raidis, ou de structures discontinues telles que des bielles articulées entre elles. Quand des panneaux sont employés, une réalisation intéressante consiste à les raccorder ensemble par un panneau central d'une pièce avec eux, qui est uni à une face extrême de la partie principale du mât : il est alors commode de raidir l'ensemble composé du panneau central et des ailes par des nervures. Si les ailes sont composées de bielles, celles-ci peuvent être au nombre de trois par aile et articulées entre elles en triangle.

Plusieurs conceptions sont envisageables pour la bride d'attache. Elle peut notamment s'étendre sur un cercle complet, ou seulement sur un secteur de cercle; il est intéressant qu'elle soit alors renforcée par un secteur complémentaire joint à elle de manière à fermer le cercle et construit avec une section moins résistante que la portion principale de cette bride. Une conception intéressante des ailes est obtenue quand elles sont construites en étant de plus en plus courtes en s'éloignant de la bride d'attache, ce qui permet de mieux exposer le moteur.

Un inconvénient possible de cette conception est l'existence d'un porte-à-faux entre la partie principale du mât et la bride d'attache du moteur. Il est toutefois possible de l'éviter si les ailes ont une largeur égale à une largeur de la partie principale axiale du mât, la bride étant alors adjacente au mât.

La bride d'attache peut être attachée directement au moteur; mais selon une conception différente pouvant être plus avantageuse quoiqu'elle soit complexe, le moteur est attaché à la bride d'attache par un élément d'accrochage qui comprend une première bride attachée à la bride d'attache et une seconde bride attachée au moteur, les brides étant circulaires, l'élément d'accrochage comprenant encore une structure rigide joignant la première bride à la seconde bride, la première bride, la seconde bride et la structure rigide entourant le moteur.

Cette seconde conception pourra être utile en particulier quand on cherche à accrocher le moteur par la région de son centre de gravité, afin de limiter la flexion interne, les contraintes et les vibrations qu'il transmet, comme on le détaillera plus loin. Elle se prête aussi à la construction d'ailes dépourvues de porte-à-faux en saillie du mât dans la direction axiale.

La filtration des efforts de poussée et des vibrations est meilleure si l'élément d'accrochage est attaché par des liaisons souples au moins au moteur (et éventuellement, en outre, au mât). Afin de supporter la portée du moteur en porte-à-faux par rapport à la bride d'attache, l'ensemble pourra être complété par une liaison souple additionnelle entre le moteur et le mât, la liaison souple additionnelle et l'élément d'accrochage étant situés de part et autre de la bride d'attache dans une direction axiale de l'aéronef.

L'invention concerne encore un aéronef pourvu d'un mât accrochage ou d'un ensemble d'aéronef selon ce qui précède.

L'invention sera maintenant décrite en détail au moyen des figures suivantes:
- la figure 1 et 2 illustrent une première réalisation antérieure de mât d'accrochage ;
- les figures 3 et 4 illustrent une deuxième réalisation antérieure de mât d'accrochage ;
- les figures 5 à 8 illustrent une première réalisation de l'invention ;
- la figure 9 illustre une deuxième réalisation de l'invention ;
- les figures 10 et 11 illustrent une troisième réalisation de l'invention ;
- et la figure 12 illustre une quatrième réalisation de l'invention.

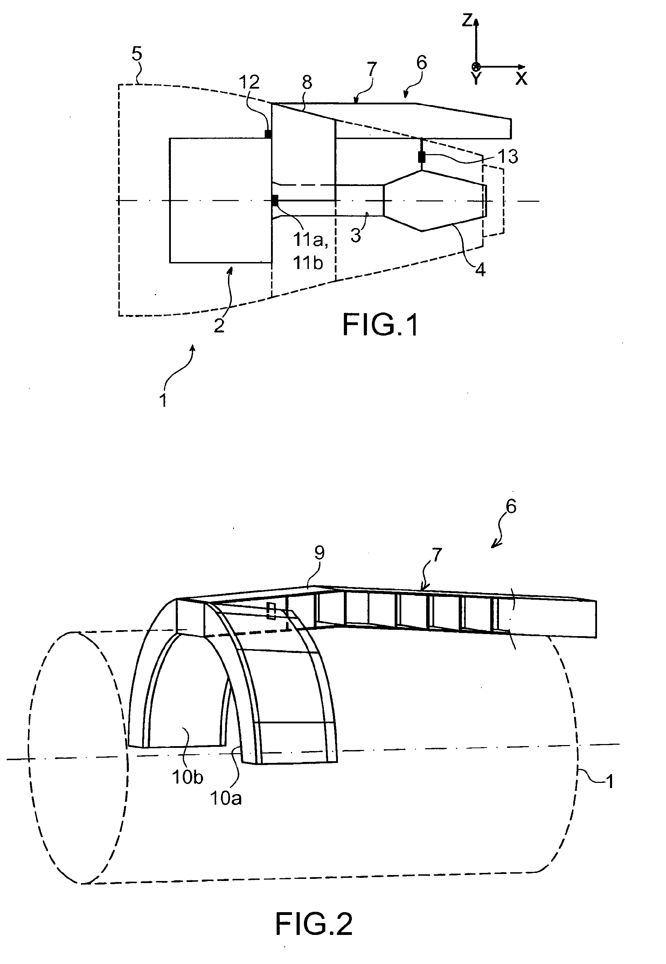

Une extrémité d'un mât d'accrochage conforme aux indications précédentes est le sujet du brevet français 2 900 907, dont la description est brièvement reprise aux figures 1 et 2. Le moteur 1 comprend d'abord en arrière un élément de soufflante 2, un élément à haute pression 3 («core») et un élément d'éjection 4 d'avant en arrière dans une nacelle 5. Le mât 6 comprend une portion principale 7 rigide s'étendant longitudinalement au-dessus de la portion à haute pression 3 et de la portion d'éjection 4, et une partie d'accrochage 8. La figure 2 montre que la partie principale 7 a une structure raidie en caissons et que la partie d'accrochage 8 comprend un longeron 9 central, s'étendant sur la génératrice supérieure du moteur 1 (à douze heures) qui prolonge la partie principale 7; la partie d'accrochage 8 est elle-même prolongée par des ailes semi-circulaires, 10a et 10b chacune en quart de cercle et qui ont encore une structure raidie en caissons. La figure 1 représente encore les liaisons du moteur au mât, 11a et 11b s'étendant au bas des ailes 10a et 10b respectivement, 12 s'étendant devant le longeron 9 et 13 s'étendant entre la partie principale 7 et le milieu de la portion d'éjection 4, nettement à l'arrière des précédentes, qui sont disposées à un plan de jonction entre la portion de soufflante 2 et la portion à haute pression 3.

Cette conception présente donc les inconvénients de difficulté de conception et de fabrication mentionnés plus haut, à cause des variations de direction entre la portion principale 7 horizontale, le longeron 9 incliné et les ailes 10a et 10b non inclinées et des risques d'une mauvaise transmission des efforts de poussée au mât 6 à cause de la forme circulaire des ailes 10a et 10b et de la jonction courte axialement entre la portion principale 7 et les ailes.

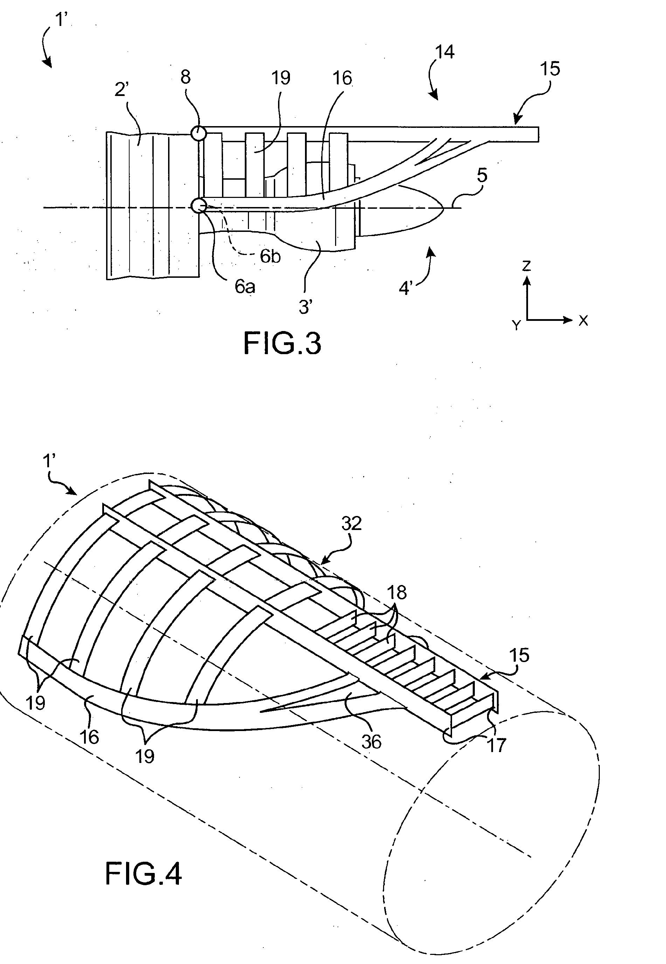

On mentionnera encore la conception du brevet français 2 873 988, représentée aux figures 3 et 4, où un moteur 1', analogue au précédent en ce qu'il est composé d'une portion de soufflante 2', d'une portion à haute pression 3' et d'une portion d'éjection 4', est soutenu par un mât 14 comprenant une structure rigide 15 orientée dans l'axe d'aéronef, et duquel se détachent des membrures 16 symétrique (une seule apparaît sur les figures) qui s'abaissent le long du moteur 1' jusqu'à s.on plan horizontal médian quand on se dirige vers l'avant. La structure rigide 14 est composée de deux longerons 17 parallèles nervurés par des entretoises intermédiaires transversales 18 qui les relient. Des arceaux 19 relient les membrures 16 aux longerons 17, et les longerons 17 entre eux en avant des entretoises 18. Ici encore le porte-à-faux du mât 14 est important et le grand nombre de pièces courbes rend la fabrication difficile.

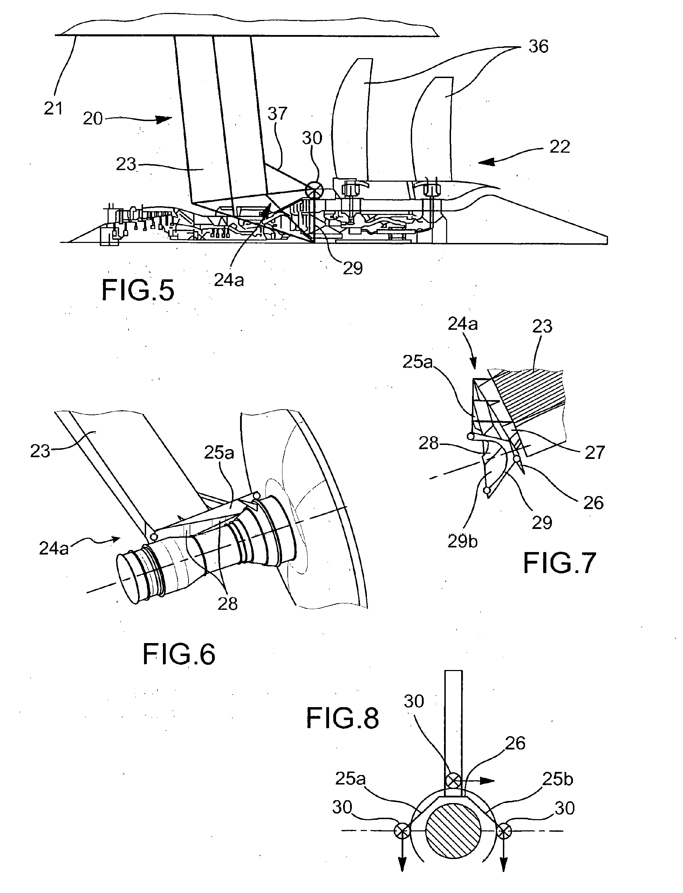

Un premier mode de réalisation d'un mât d'accrochage nouveau est décrit au moyen des figures 5, 6, 7 et 8. Le mât porte la référence générale 20 et relie un aéronef 21 (représenté partiellement) à un moteur, maintenant 22. Il comprend une partie principale 23 linéaire et sensiblement verticale, pouvant avoir une structure de caisson comme dans de nombreuses réalisations connues, et une partie de raccord 24a au moteur 22. La partie de raccord 24a comprend deux ailes 25a et 25b symétriques, et formant entre elles un angle aigu ou obtus en s'étendant de part et d'autre de la partie principale 23 en direction latérale et au-dessous d'elle, en coiffant une portion centrale du moteur 22. Les ailes 25a et 25b sont des panneaux plans, sont réunies entre elles par un panneau central 26 avec lequel elles sont d'une pièce et qui est uni à une face extrême 27 de la partie principale 23, et elles sont rendues rigides par des nervures 28 situées sous la partie principale 23 et qui les relient entre elles ainsi qu'au panneau central 26.

La partie de raccord 24a comprend encore une bride d'attache 29, plane ou en forme de caisson s'étendant sur un secteur de cercle; elle est unie aux ailes 25a, 25b et au panneau central 26 par une face plane, et porte les liaisons 30 au moteur 22. Une des liaisons 30 est à douze heures (à la génératrice supérieure du moteur 22), les autres à hauteur du plan médian horizontal ou plus haut (formant un angle de 180° ou moins dont le sommet.est à l'axe de rotation du moteur 22) sur sa face. Cette réalisation est caractérisée par une très grande simplicité de conception qui se traduit en particulier en ce que toutes les pièces sont planes et délimitées par des arêtes rectilignes, qu'il est donc facile d'assembler, à l'exception inévitable de la bride d'attache 29 qu'il est toutefois possible de fixer par une face plane aux extrémités des ailes 25a, 25b et du panneau central 26. On limite aussi l'apparition de contraintes complexes dans la partie de raccord 24a, notamment de flexion autour de l'axe vertical Z et de l'axe transversal Y et qui sont difficiles à éviter dans des conceptions précédentes de forme plus compliquée : les efforts de poussée du moteur 22 sont transmis aux ailes 25a, 25b et au panneau central 26 sous forme d'efforts dirigés dans leur plan, théoriquement sans composante perpendiculaire à l'égard de laquelle la partie de raccordement serait beaucoup moins rigide.

Les liaisons 30 peuvent être placées dans un même plan transversal du moteur 22, avantageusement près de son centre de gravité, et peuvent constituer en des liaisons souples. Les effets en découlant seront décrits plus en détail à propos d'une autre réalisation. Il est à noter que d'une façon générale les modes de réalisation décrits dans ce texte ne sont ni exclusifs ni incompatibles, mais que leurs détails peuvent au contraire souvent être combinés ou transposés en retrouvant les efforts associés à ces détails.

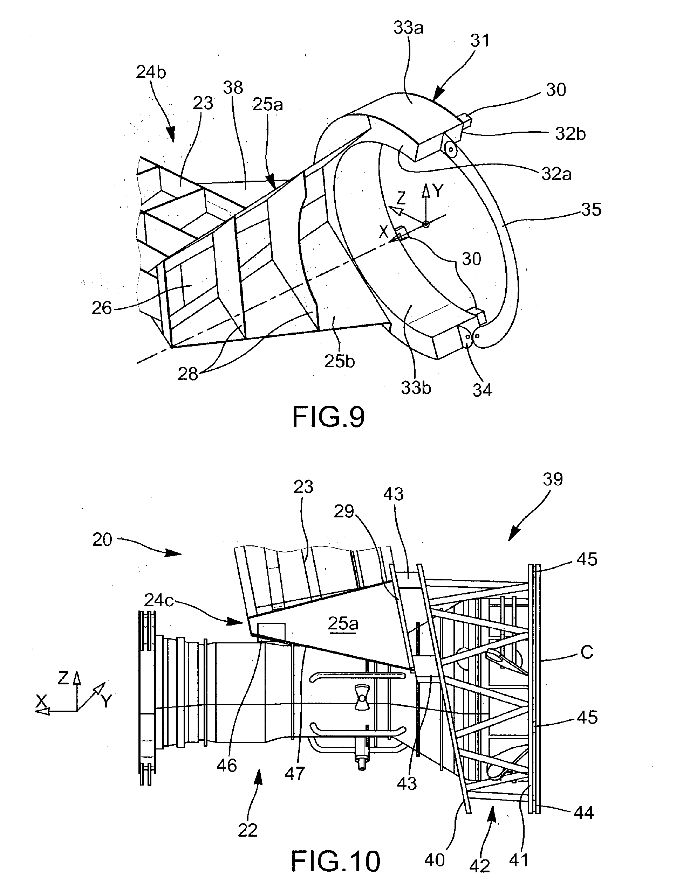

La figure 9 représente un autre mode de réalisation, où la bride d'attache porte désormais la référence 31 et se distingue de la précédente en ce qu'elle s'étend sur une certaine largeur (mesurée dans la direction axiale du moteur 22 et de l'aéronef 21), qu'elle a une structure cloisonnée en caissons avec deux peaux planes 32a et 32b respectivement fixées aux ailes 25a et 25b et au panneau central 26, et au moteur 22 par les liaisons 30, deux peaux circulaires 33a et 33b concentriques joignant des précédentes, et une peau interne 34 de raidissage, s'étendant entre les peaux circulaires 33a et 33b à mi-distance des peaux planes 32a et 32b. Un élément peut-être plus remarquable de ce mode de réalisation est un arceau 35 de raidissage qui relie les extrémités de la bride d'attache 31, en étant articulé à l'une d'elles et assujetti l'autre en passant sous le moteur 22; son rôle n'est pas de soutenir le moteur 22 mais d'améliorer la cohésion de la partie de raccord (24b dans ce mode de réalisation) ; il est préconisé que la bride d'attache 31 s'étende alors sur un peu plus d'un demi-cercle, et l'arceau 35 sur un peu moins.

Un inconvénient commun à ces deux modes de réalisation apparaît toutefois quand la partie principale 23 du mât 20 doit être éloignée de la région d'attache au moteur 22 en direction axiale, par exemple pour l'éloigner d'hélices 36, ce qui oblige alors à allonger la partie de raccord 24a ou 24b et à laisser subsister un porte-à-faux important entre la partie principale 23 du mât 20 et les liaisons 30 au moteur 22. Les efforts dus à ce porte-à-faux peuvent être en partie absorbés par des poutres d'étayage 37 (représentées à la figure 5) reliant la bride d'attache 29 à la partie principale 23 ou, de façon équivalente des nervures pleines 38 s'étendant aux mêmes endroits. Une conception plus radicale pour réduire les effets de porte-à-faux, en éliminant celui-ci de la partie de raccord 24, sera décrite au moyen d'autres modes de réalisation du mât d'accrochage, détaillés ci-dessous.

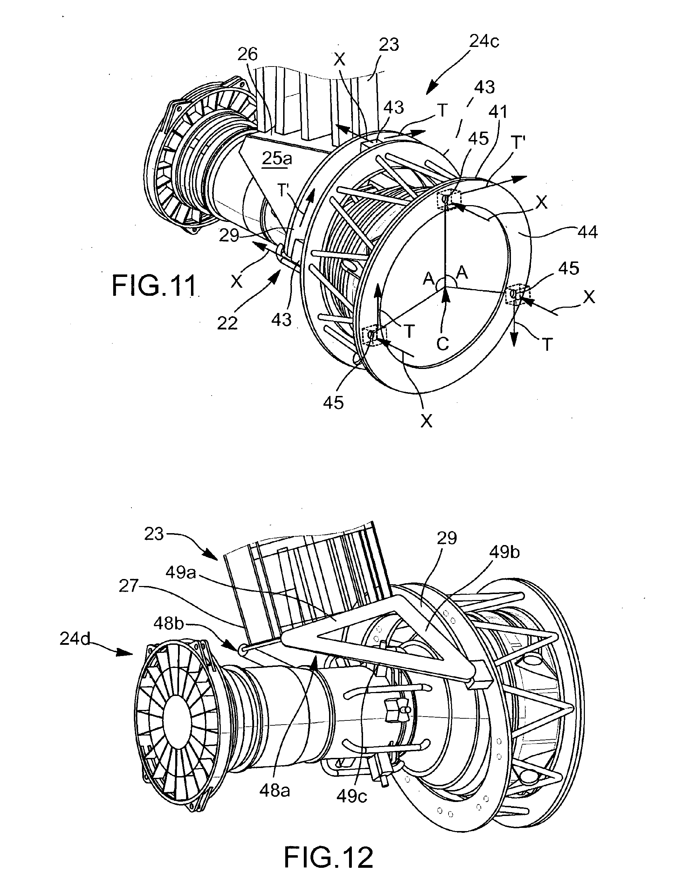

On se reporte aux figures 10 et 11. La partie de raccord 24c comprend comme précédemment des ailes 25a, 25b et un panneau central 26, mais qui sont ici moins larges, c'est-à-dire qu'ils ne dépassent pas de la partie principale 23 dans la direction axiale X de l'aéronef. La bride d'attache 29 n'est pas ici jointe directement au moteur 22 mais à un élément d'accrochage 39 composé d'un première bride 40, d'une seconde bride 41 et d'une structure rigide 42 intermédiaire aux brides 40 et 41. La première bride 40 est reliée à la bride d'attache 29 par des boulonnages ou par des liaisons souples 43; et la seconde bride 41 est reliée à une bride 44 du moteur 22, par des boulonnages ou des liaisons souples 45. La seconde bride 41 et les liaisons souples 45 entourent une région du centre de gravité C du moteur 22 (représenté de façon tronquée sur ces figures). La.structure rigide 42 peut consister en des panneaux, ou, peut-être plus avantageusement, en éléments discontinus sur la circonférence comme des cadres, des poutres ou des tubes, ce qu'on a représenté. Il est à noter que les brides 40 et 41 n'ont pas d'orientations imposées et ne sont pas forcément parallèles entre elles : il est plausible que la seconde bride 41 portant les liaisons 45 au moteur 22 soit dans un plan coupant à angle droit l'axe du moteur 22, et que la première bride 40 soit oblique, parallèle à la bride d'attache 29 prolongeant la face arrière de la partie principale 23 du mât 20, cette partie principale 23 pouvant être inclinée ; mais cela n'est pas indispensable.

L'élément d'accrochage 39 intermédiaire à la partie de raccord 24c et au moteur 22a une résistance plus grande que celle-là et résiste donc mieux qu'elle aux efforts produits par le porte-à-faux. Un autre avantage est qu'elle forme une structure circulaire qui enveloppe complètement le moteur 22 et résiste donc à ce qu'on appelle des tirs de disque, c'est à dire des avaries du rotor du moteur 22 dans lesquelles une partie s'étendant sur un secteur angulaire se détache et est projetée sous l'action de forces centrifuges hors du moteur en crevant son l'enveloppe et détruisant les structures environnantes. Ces tirs de disques, qui peuvent se produire à des emplacements variés, ont des conséquences catastrophiques s'ils rompent le mât et que le moteur tombe ;.mais cette éventualité devrait être exclue ici, puisque l'élément d'accrochage 39 s'étend sur un tour complet du moteur 22, et devrait donc rester majoritairement intact même si le tir le traversait ; et par ailleurs, le mât 20 et la bride d'attache 29 ont des extensions suffisantes en direction de l'axe du moteur et en direction angulaire pour ne pas être coupées entièrement par un tir dirigé vers eux.

On se reporte plus particulièrement à la figure 11 pour la description d'un mode particulier d'attache. Des liaisons judicieusement choisies permettent des montages isostatiques, qui permettent de maîtriser la répartition des contraintes et ainsi d'éviter les contraintes les plus défavorables dans les éléments qu'elles relient, à savoir les contraintes de flexion dans la partie de raccord 24c et aussi dans le moteur 22, puisque les flexions conduisent à des irrégularités de jeu entre le rotor et le stator, à des baisses de performance, voire à de l'usure prématurée. Un montage intéressant comprend trois liaisons 45 entre la seconde bride 41 et la bride.44 du moteur, réparties régulièrement sur la circonférence, avec l'une placée à la génératrice supérieure, et chacune étant conçue pour pouvoir transmettre un effort dans la direction axiale X et un autre effort dans la direction tangentielle T du moteur. La répartition, peut être absolument régulière, les liaisons 45 étant à des angles de 120°, ou moins régulière, les liaisons 45 latérales faisant des angles A de 90° à 120° avec la liaison 45 supérieur. De plus, les liaisons 43 entre la première bride 40 de l'élément d'accrochage 39 et la bride d'attache 29 sont conçues.pour transmettre des efforts dans la direction X et la direction T', sensiblement tangentielle aux brides et dirigée précisément dans la direction principale de l'aile 25a ou 25b ou du panneau central 26, devant lequel les liaisons 43 s'étendent respectivement. On notera une dernière liaison souple 46, reliant directement la face inférieure du panneau central 26 et le moteur 22, à l'avant du mât 20, c'est-à-dire de l'autre côté de la bride d'attache 29 que les autres liaisons 43 et 45.

Dans un mode particulier de réalisation, les liaisons 43 et plus particulièrement 45 peuvent être souples. Cette réalisation permet de filtrer les vibrations du moteur vis-à-vis du reste de l'aéronef.

Les effets de cette conception peuvent être explicités ainsi. Si l'attache du moteur 22 se fait par un plan passant par le centre de gravité, il est alors possible de découpler les modes propres de vibration qui sont transmis au reste de l'appareil et plus facile de les traiter pour les réduire, en utilisant des mesures connues et notamment en choisissant judicieusement les liaisons 45 souples et leurs emplacements. Le découplage, provenant du montage isostatique, et la souplesse provenant des liaisons souples permettent donc de filtrer les vibrations, et le choix de liaisons transmettant seulement des forces axiales X et tangentielles T évite de transmettre des contraintes de flexion dans l'élément d'accrochage 39. Les liaisons souples 43 adjacentes à la bride d'attache 39 ont des propriétés et des effets analogues d'éviter de fléchir les ailes 25a, 25b et le panneau central 26, et de permettre de filtrer les vibrations. La transmission des efforts du moteur 22 au mât 20 est graduelle, sans irrégularité excessive des contraintes dans la partie du raccord 24c et l'élément d'accrochage 39, si les liaisons 43 et 45 sont assez bien alignées par paires dans la direction X, c'est-à-dire que les liaisons 43 et 45 sont aussi nombreuses et à des espaces angulaires voisins. Les efforts découlant du porte-à-faux sont subis principalement par l'élément d'accrochage 39 qui est très rigide, puis par les ailes 25a et 25b qui, tout en étant moins rigides, leur résistent bien aussi grâce à leur planéité, à l'absence d'effort perpendiculaire à leur plan et à leur soutien par la partie principale 23 sur toute leur largeur (en direction axiale X). La liaison souple additionnelle 46 permet de reprendre une partie des efforts Y et Z dus au porte-à-faux, dans les directions Y et Z. Elle peut servir aussi à filtrer certains modes de vibration, sans introduire une flexion nuisible du moteur 22.

Malgré tous les avantages des liaisons discrètes, il est possible d'y renoncer et d'éclisser les brides 39, 40, 41 et 44 par des boulons, ce qui peut impliquer un allégement de l'ensemble.

Un autre avantage des ailes 25a et 25b et qu'elles peuvent facilement être pourvues d'un bord oblique 47 de manière qu'elles soient de plus en plus courtes vers l'avant, c'est-à-dire qu'elles coiffent moins le moteur 22 et elles permettent donc un accès plus facile que les structures habituelles en quart de cercle, qu'il serait plus difficile de construire avec un tel bord.

On passe à la figure 12 pour un autre mode de réalisation d'une partie de raccord 24d. Les ailes 25a, 25b sont remplacées par des ailes 48a et 48b également planes et ayant à peu près la même extension, mais qui ne sont pas composées ici de panneaux ou de plaques mais de trios de bielles articulées en elles en triangles, une première des bielles 49a s'étendant contre la face extrême de la partie principale 23, une deuxième 49b le long de la bride d'attache 29, et la troisième 49c entre les précédentes, à l'emplacement du bord oblique 47 de l'autre mode de réalisation. Le panneau 26 central peut éventuellement être absent. L'invention est applicable à différents genres de moteur, notamment le propulseur à soufflante (propfan) et le turboréacteur à double flux (turbofan). Le mât peut être accroché au fuselage ou à la voilure de l'aéronef 21.

## Revendications

1. Mât (20) d'accrochage de moteur (22) d'aéronef (22), comprenant une partie principale (23) linéaire et une partie de raccord (24a à 24d) jointe à la partie principale, .**caractérisé en ce que** la partie de raccord comprend deux ailes (25a, 25b, 48a, 48b) planes s'étendant latéralement à la partie principale en formant un angle entre elles, et une bride d'attache (29, 31) ayant la capacité de reprendre en totalité les efforts moteurs, la bride d'attache s'étendant sur au moins un secteur de cercle et étant jointe aux ailes par une face plane.

2. Mât selon la revendication 1, **caractérisé en ce que** les ailes ont une largeur égale à une largeur de la partie principale en direction axiale (X) de l'aéronef.

3. Mât selon la revendication 1 ou 2, **caractérisé en ce que** les ailes (25a, 25b) sont composées de panneaux.

4. Mât selon la revendication 3, **caractérisé en ce que** la partie de raccord comprend un panneau central (26) uni à une face extrême (27) de la partie principale et d'une pièce avec les ailes (25a, 25b).

5. Mât selon la revendication 4, **caractérisé en ce que** le panneau central et les ailes sont unies par des nervures (28).

6. Mât selon la revendication 1 ou 2, **caractérisé en ce que** les ailes (48) sont composées de bielles (49) articulées entre elles.

7. Mât selon la revendication 6, caractérisé en que les bielles sont au nombre de trois et articulés entre elles, en triangle, pour chacune des ailes.

8. Mât selon l'une quelconque des revendications 1 à 7, **caractérisé en ce que** la bride d'attache comprend une partie principale qui s'étend sur un secteur de cercle et un secteur complémentaire (35) joint à la partie principale de manière à fermer le cercle, et construit avec une section moins résistante que la portion principale.

9. Mât selon l'une quelconque des revendications 1 à 8, **caractérisé en ce que** les ailes sont de plus en plus courtes en s'éloignant de la bride d'attache.

10. Ensemble d'aéronef comprenant un mât d'accrochage et un moteur selon l'une quelconque des revendications précédentes, **caractérisé en ce que** le moteur est attaché directement à la bride d'attache.

11. Ensemble d'aéronef comprenant un mât d'accrochage et un moteur selon l'une quelconque des revendications 1 à 9, **caractérisé en ce que** le moteur (22) est attaché à la bride d'attache (29) par un élément d'accrochage (39) qui comprend une première bride (40) attachée à la bride d'attache et une seconde bride (41) attachée au moteur, la première bride et la seconde bride étant circulaires sur un tour, l'élément d'accrochage comprenant encore une structure rigide (42) joignant la première bride (40) à la seconde bride, la première bride, la seconde bride et la structure entourant le moteur.

12. Ensemble d'aéronef selon la revendication 11, **caractérisé en ce que** l'élément d'accrochage est attaché au moins au moteur par des liaisons souples (45).

13. Ensemble d'aéronef selon la revendication 12, **caractérisé en ce qu'**il comprend une 5 liaison souple additionnelle (46) entre le moteur et le mât, la liaison souple additionnelle et l'élément d'accrochage étant situés de part et d'autre de la bride d'attache (29) dans une direction axiale de l'aéronef.

14. Aéronef, **caractérisé en ce qu'**il est pourvu d'un mât d'accrochage suivant l'une quelconque des revendications 1 à 9.

15. Aéronef, **caractérisé en ce qu'**il est pourvu d'un ensemble d'aéronef suivant l'une quelconque 15 des revendications 10 à 13.

## Patentansprüche

1. Aufhängungssystem (20) für ein Triebwerk (22) eines Luftfahrzeugs (22), umfassend einen linearen Hauptteil (23) und einen mit dem Hauptteil verbundenen Verbindungsteil (24a bis 24d), **dadurch gekennzeichnet, dass** der Verbindungsteil zwei plane Flügel (25a, 25b, 48a, 48b), die sich seitlich am Hauptteil erstrecken, wobei sie miteinander einen Winkel bilden, und einen Anschlussflansch (29, 31), der die Fähigkeit aufweist, die Bewegungskräfte insgesamt aufzunehmen, umfasst, wobei sich der Anschlussflansch über mindestens einen Kreisausschnitt erstreckt und über eine plane Fläche mit den Flügeln verbunden ist.

2. System nach Anspruch 1, **dadurch gekennzeichnet, dass** die Flügel eine Breite aufweisen, die gleich einer Breite des Hauptteils in der axialen Richtung (X) des Luftfahrzeugs ist.

3. System nach Anspruch 1 oder 2, **dadurch gekennzeichnet, dass** die Flügel (25a, 25b) aus Platten bestehen.

4. System nach Anspruch 3, **dadurch gekennzeichnet, dass** der Verbindungsteil eine Mittelplatte (26) aufweist, die mit einer Endfläche (27) des Hauptteils verbunden und einstückig mit den Flügeln (25a, 25b) ist.

5. System nach Anspruch 4, **dadurch gekennzeichnet, dass** die Mittelplatte und die Flügel durch Rippen (28) verbunden sind.

6. System nach Anspruch 1 oder 2, **dadurch gekennzeichnet, dass** die Flügel (48) aus untereinander beweglichen Stangen (49) bestehen.

7. System nach Anspruch 6, **dadurch gekennzeichnet, dass** für jeden der Flügel die Stangen zahlenmäßig drei sind und untereinander im Dreieck beweglich sind.

8. System nach einem der Ansprüche 1 bis 7, **dadurch gekennzeichnet, dass** der Anschlussflansch einen Hauptteil, der sich über einen Kreisausschnitt erstreckt, und einen komplementären Sektor (35), der mit dem Hauptteil derart verbunden ist, dass er den Kreis schließt, und mit einem weniger widerstandsfähigen Querschnitt als der Hauptabschnitt konstruiert ist, umfasst.

9. System nach einem der Ansprüche 1 bis 8, **dadurch gekennzeichnet, dass** die Flügel bei zunehmender Entfernung vom Anschlussflansch immer kürzer sind.

10. Luftfahrzeuganordnung mit einem Aufhängungssystem und einem Triebwerk nach einem der vorhergehenden Ansprüche, **dadurch gekennzeichnet, dass** das Triebwerk direkt an dem Anschlussflansch angebracht ist.

11. Luftfahrzeuganordnung mit einem Aufhängungssystem und einem Triebwerk nach einem der Ansprüche 1 bis 9, **dadurch gekennzeichnet, dass** das Triebwerk (22) an dem Anschlussflansch (29) durch ein Aufhängungselement (39) angebracht ist, das einen ersten, an dem Anschlussflansch angebrachten Flansch (40) und einen zweiten, an dem Triebwerk angebrachten Flansch (41) aufweist, wobei der erste Flansch und der zweite Flansch über einen Umfang kreisförmig sind, das Aufhängungselement ferner eine starre Struktur (42) aufweist, die den ersten Flansch (40) mit dem zweiten Flansch verbindet, wobei der erste Flansch, der zweite Flansch und die Struktur das Triebwerk umrunden.

12. Luftfahrzeuganordnung nach Anspruch 11, **dadurch gekennzeichnet, dass** das Aufhängungselement mindestens an dem Triebwerk über gelenkige Verbindungen (45) angebracht ist.

13. Luftfahrzeuganordnung nach Anspruch 12, **dadurch gekennzeichnet, dass** sie eine zusätzliche gelenkige Verbindung (46) zwischen dem Triebwerk und dem System aufweist, wobei sich die zusätzliche gelenkige Verbindung und das Aufhängungselement auf der einen bzw. der anderen Seite des Anschlussflansches (29) in einer axialen Richtung des Luftfahrzeugs befinden.

14. Luftfahrzeug, **dadurch gekennzeichnet, dass** es mit einem Aufhängungssystem nach einem der Ansprüche 1 bis 9 versehen ist.

15. Luftfahrzeug, **dadurch gekennzeichnet, dass** es mit einer Luftfahrzeuganordnung nach einem der Ansprüche 10 bis 13 versehen ist.

## Claims

1. An aircraft engine (22) mounting structure (20), including a linear main portion (23) and a connecting portion (24a to 24d) attached to the main portion, **characterised in that** the connecting portion includes two flat wings (25a, 25b, 48a, 48b) extending laterally to the main portion at an angle to one another, and an attaching flange (29, 31) able to transmit all the motive forces, where the attaching flange extends at least over a sector of a circle and is attached to the wings by a flat face.

2. A structure according to claim 1, **characterised in that** the width of the wings is equal to a width of the main portion in the aircraft's axial direction (X).

3. A structure according to claim 1 or 2, **characterised in that** the wings (25a, 25b) consist of panels.

4. A structure according to claim 3, **characterised in that** the connecting portion includes a central panel (26) combined with an end face (27) of the main portion and forming a single part with the wings (25a, 25b).

5. A structure according to claim 4, **characterised in that** the central panel and the wings are combined by ribs (28).

6. A structure according to claim 1 or 2, **characterised in that** the wings (48) consist of connecting rods (49) joined to one another.

7. A structure according to claim 6, **characterised in that** there are three interconnected connecting rods, in the shape of a triangle, for each of the wings.

8. A structure according to any of the claims 1 to 7, **characterised in that** the attaching flange includes a main portion which extends over a sector of the circle and an additional sector (35) attached to the main portion so as to close the circle, and manufactured with a less resistant section than the main portion.

9. A structure according to any of the claims 1 to 8, **characterised in that** the wings are shorter the further they are from the attaching flange.

10. An aircraft assembly including a mounting structure and an engine according to any of the previous claims, **characterised in that** the engine is attached directly to the attaching flange.

11. An aircraft assembly including a mounting structure and an engine according to any of the claims 1 to 9, **characterised in that** the engine (22) is attached to the attaching flange (29) by a mounting element (39) which includes a first flange (40) attached to the attaching flange and a second flange (41) attached to the engine, where the first flange and the second flange are circular over a circumference, where the mounting element also includes a rigid structure (42) attaching the first flange (40) to the second flange, and where the first flange, the second flange and the structure surround the engine.

12. An aircraft assembly according to claim 11, **characterised in that** the mounting element is attached at least to the engine by flexible connections (45).

13. An aircraft assembly according to claim 12, **characterised in that** it includes an additional flexible connection (46) between the engine and the structure, where the additional flexible connection and the mounting element are located either side of the attaching flange (29) in an axial direction of the aircraft.

14. An aircraft, **characterised in that** it is fitted with a mounting structure according to any of the previous claims.

15. An aircraft, **characterised in that** it is fitted with an engine assembly according to any of the claims 10 to 13.
